# EUROPEAN PATENT SPECIFICATION

(11) **EP 0 323 576 B1**
(45) Date of publication and mention of the grant of the patent: **29.03.1995**
(21) Application number: 88120120.6
(22) Date of filing: 02.12.1988
(51) Int. Cl.: G11B 15/675

(54) **Tape cassette loading mechanism in tape player**
Bandkassettenlademechanismus in einem Bandwiedergabegerät
Mécanisme de chargement de cassette à bande d'un appareil de reproduction de bande

(30) Priority: 09.12.1987 JP 312805/87; 09.12.1987 JP 312806/87; 09.12.1987 JP 312807/87; 09.12.1987 JP 312808/87; 09.12.1987 JP 312809/87; 09.12.1987 JP 312810/87; 09.12.1987 JP 312811/87
(43) Date of publication of application: 12.07.1989
(60) Divisional application: 92107885.3
(73) Proprietor: MITSUBISHI DENKI KABUSHIKI KAISHA, Tokyo 100 (JP)
(72) Inventor: Nakanishi, Yasuyuki Mitsubushi Denki K.K., Sanda-shi Hyogo (JP)
(74) Representative: Eisenführ, Speiser & Partner

(56) References cited:
- EP-A- 0 177 133
- EP-A- 0 190 031
- EP-A- 0 204 585
- LU-A- 65 778
- US-A- 3 740 495

## Description

### BACKGROUND OF THE INVENTION

### Field of the Invention

The present invention relates to a tape cassette loading mechanism in a tape player for loading a recorded tape enclosed in a tape cassette to a playing position.

### Description of the Prior Art

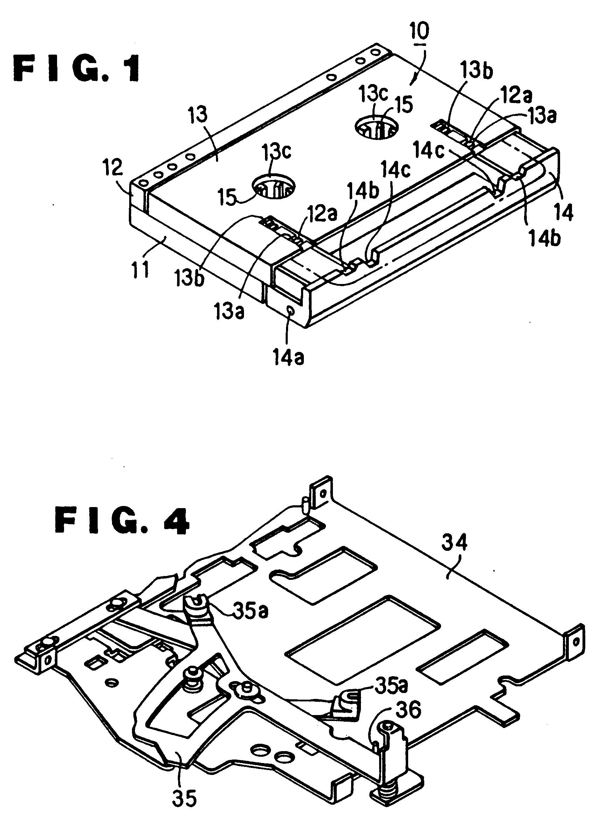

Fig. 1 shows an outline of a tape cassette used for a digital audio tape player. In the same figure, a tape cassette 10 is composed of upper and lower cases 11 and 12 for enclosing therein a magnetic tape wound round a pair of tape reels, a slider 13 mounted slidably over the outer peripheral surface of the lower case 12, and a lid 14 disposed in a front opening defined by the upper and lower cases 11 and 12. The lower case 12 is provided with downwardly projecting lugs 12a, while the slider 13 is formed with first retaining apertures 13a and second like apertures 13b for engagement with the lugs 12a to restrict the position of the slider 13. In a second position in which the lugs 12a are engaged with the second retaining apertures 13b, the slider 13 abuts the lid 14 to enclose the magnetic tape completely, while in a first position in which the lugs are engaged with the first retaining apertures 13a, the slider 13 is completely spaced away from the lid 14, permitting the lid 14 to pivot about fulcrums 14a thereof. The slider 13 is further formed with apertures 13c in opposed relation to reel hubs 15 of the reels with the magnetic tape wound thereon, through which apertures 13c are inserted reel rotating shafts. The slider 13 is urged in a direction of abutment with the lid 14 by means of a spring and the magnetic tape is disposed so as to travel along the inner peripheral surface of the lid 14 from the interior of the lower case 12 as indicated by a dot-dash line. Further, the lid 14 has grooves 14b formed in positions opposed to the lugs 12a at a depth substantially corresponding to the plate thickness of the slider 13 and also has grooves 14c formed at a depth not causing the magnetic tape to be exposed.

In recording or playback of information in the tape player using the tape cassette 10 constructed as above, it is necessary that the magnetic tape be exposed from the tape cassette 10 and brought into contact with the magnetic head. To this end it is necessary that the slider 13 be held in the first position and the lid 14 pivoted upon loading of the tape cassette 10.

EP-A-0 204 585 from which the invention proceeds discloses a tape cassette loading mechanism including a cassette holding means consisting of a lower holder having lugs formed on the bottom thereof for engagement with retaining apertures formed in the slider and also has bent pieces formed at the front end thereof to retain the front end portion of the slider, and an upper holder formed separately from the lower holder to support the upper case of the tape cassette.

For using such tape player as a player for an automobile, e.g. a passenger car, it is necessary to reduce the size of the entire apparatus because of a limited mounting space in the automobile.

### SUMMARY OF THE INVENTION

The present invention has been accomplished in view of the above mentioned point and it is an object thereof to reduce the size of the tape cassette loading mechanism thereby providing a compact and light-weight tape player.

In order to achieve the above-mentioned object, a tape player according to the present invention and as defined in claim 1 includes a lower holder for holding a slider of a tape cassette and an upper holder constructed separately from the lower holder to hold a case of the tape cassette, the lower holder being movable relative to the upper holder.

In the said tape player, since the upper and lower holders are constructed separately, the lower holder can be moved in a relative manner, so it is possible to move the slider to the magnetic tape exposed position effectively by a tape cassette inserting operation and reduce the tape insertion distance thereby attaining a compact construction of the apparatus.

In the tape player of the invention, moreover, lugs for engagement with retaining apertures of the slider are formed on the bottom of the lower holder, and bent pieces for retaining the front end of the slider are formed on the front end portion of the lower holder, and the whole of the lower holder is U-shaped. The upper holder is also U-shaped as a whole and supports the lower holder. The tape player is further provided with guide plates along the side walls of the lower and upper holders for holding those holders movably in the tape cassette inserting direction. One of the opposed side walls on each side of the lower and upper holders is formed with a concave portion, while the other is formed with a convex portion, the concave and convex portions being engaged with each other through a predetermined moving space. The slider of the tape cassette is opened by a relative movement of the said moving space.

Thus, in the tape player of the invention, since concave and convex portions are formed at one and the other, respectively, of the opposed side walls on each side of both holders, and are engaged with each other through a predetermined moving space, the tape cassette slider can be opened effectively by the movement of the moving space. Besides, the side walls of the lower and upper holders can be reduced in size in their wall thickness direction because they are not superimposed one on the other laterally.

In the tape player of the invention, moreover, one of the opposed side walls on each side of the lower and upper holders is formed with a convex portion and the other formed with a concave portion, the convex and concave portions being engaged with each other through a predetermined moving space, and pins are attached to the convex portion and the other side wall face in positions equal in height to the convex portion, the said pins being brought into engagement with a linear guide slot formed in each guide plate.

Thus, in the tape player of the invention, the lower and upper holders are guided along the same guide slot of each guide plate and both holders are moved in a relative manner within the predetermined spaces, whereby not only the tape cassette slider can be opened effectively but also the tape cassette inserting distance can be shortened to attain the reduction in size of the apparatus.

Further, a tape player according to the present invention includes a U-shaped lower holder having a bottom and both side walls for supporting a slider, the side walls being each formed with a convex portion at an intermediate part thereof; first pins projecting from both side walls of the lower holder; a U-shaped upper holder formed separately from the lower holder and having both side walls disposed in opposed relation to the said convex portions each through a predetermined moving space and also having an upper surface portion for supporting an upper case; shift levers attached pivotably to the upper holder to support the first pins movably; second pins fixed to the shift levers respectively; and guide plates disposed along the side walls of the lower and upper holders and each having a stepped guide slot continuous through an inclined portion and a linear guide slot, the first pins being brought into engagement with the linear guide slots of the guide plates and the second pins into engagement with the stepped guide slots of the same plate, wherein the movement of the second pins along the inclined portions with movement of the holders causes the shift levers to pivot, thus causing the lower holder to move in the direction opposite to the advancing direction of the tape cassette in a relative relation to the upper holder.

Thus, in the said tape player according to the present invention, the first pins are engaged with the linear guide slots of the guide plates and the second pins attached to the shift levers are engaged with the stepped guide slots, whereby the shift levers can be moved when the second pins move along the inclined portions of the stepped guide slots. This pivotal motion causes the first pins to move in a relative manner, thus permitting the lower holder to move in the direction opposite to the inserting direction of the tape cassette. Consequently, the tape cassette slider can be opened without enlarging the tape cassette inserting distance.

### BRIEF DESCRIPTION OF THE DRAWINGS

Fig. 1 is a perspective view showing an outline of a tape cassette commonly used in a conventional digital audio tape player;
Fig. 2 is an exploded perspective view showing a tape cassette loading mechanism according to an embodiment of the present invention;
Figs. 3 and 4 are each an exploded perspective view showing a principal construction in Fig. 2; and
Figs. 5, 6, 7 and 8 are side views showing operating conditions of a principal portion in Fig. 2.

### DETAILED DESCRIPTION OF THE PREFERRED EMBODIMENT

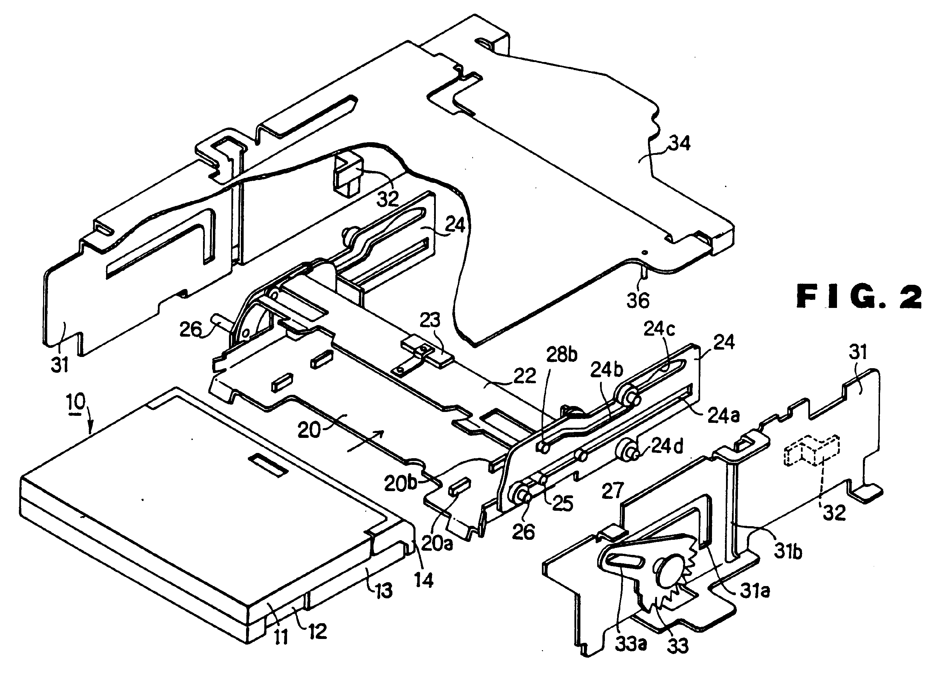

An embodiment of the present invention will be described in detail hereinunder with reference to Figs. 2 to 8.

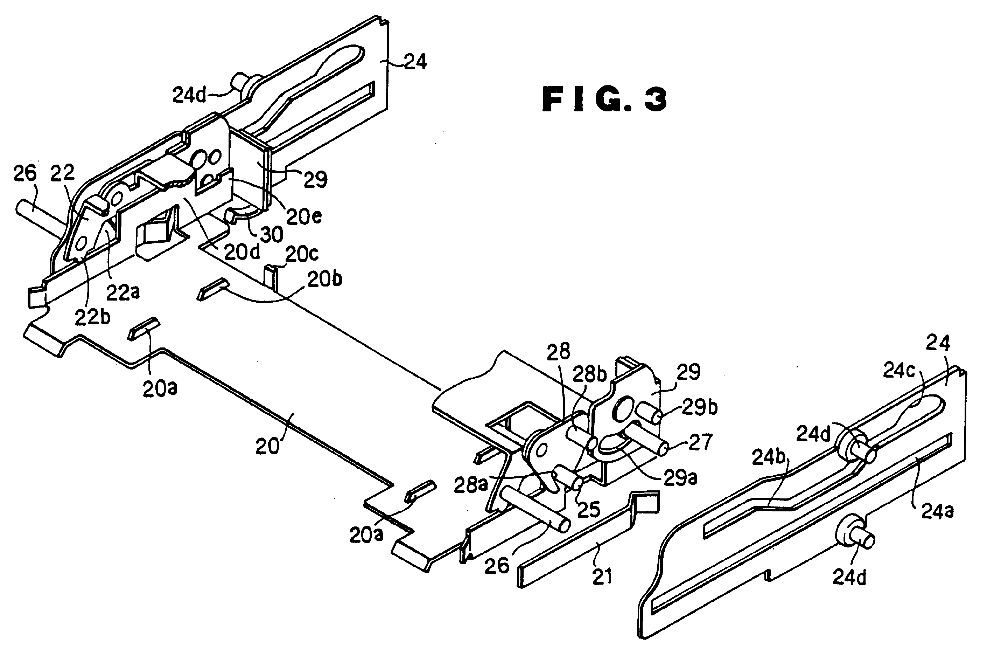

In Fig. 2, the reference numeral 20 denotes a U-shaped lower holder which supports a tape cassette 10. As shown in Fig. 3, two pairs of embossed lugs 20a and 20b are formed on the bottom of the lower holder and a pair of bent pieces 20c are formed at the front portion of the same holder; further, elastic plates 21 are projecting from both side walls of the lower holder. Numeral 22 denotes a U-shaped upper holder which holds the tape cassette 10 in cooperation with the lower holder 20, with a hook 23 being attached to the upper surface of the upper holder which hook is capable of undergoing elastic deformations. The side walls of the upper holder 22 are formed in U shape, each having an intermediate concave portion 22a in which is disposed a convex portion 20d of each side wall of the lower holder 20 through a predetermined moving space. And the opposed faces of each side walls of both holders are formed with arcuate lugs 20e and 22b to reduce the moving friction. Numeral 24 denotes a guide plate and a pair of guide plates 24 are disposed on both sides of the holders 20 and 22. The guide plates 24 are each formed with a linear guide slot 24a, a stepped guide slot 24b which is continuous through inclined portions, and an elliptic guide slot 24c formed at the front end of the guide slot 24b. Further, a pair of pins 24d are formed on the outside faces of the guide plates. Through the guide slots 24a of the guide plates 24 are inserted pins (first pins) 25 attached to the lower holder 20 and pins (third pins) 26 and 27 attached to the upper holder 22.

In Fig. 3, numeral 28 denotes a shift lever attached pivotably to the upper holder 22. The shift lever 28 is formed with a slot 28a for engagement with each pin 25 and with a pin (second pin) 28b for engagement with each guide slot 24b being attached to the shift lever. Numeral 29 denotes an L-shaped arm provided rotatably on the front end side of the upper holder 22; the arm 29 has an arcuate slot 29a for insertion therethrough of each pin 27 and with a pin (fourth pin) 29b for engagement with the guide slots 24b and 24c being attached to the arm 29. Numeral 30 denotes an elastically deformable, L-shaped spring (resilient member) disposed on a free end side of the arm 29 in opposed relation to the bottom of the lower holder 20, and numeral 31 denotes a side plate disposed outside each guide plate 24. The side plate 31 is formed with an L-shaped slot 31a and a vertical slot (31b), with the pins 26 and 24d being in engagement with the slots 31a and 31b, respectively. Numeral 32 denotes an L-shaped retaining piece mounted on the inner wall surface of the plate 31 and numeral 33 denotes an arm attached pivotably to the outer wall surface of the plate 31. The arm 33 is formed with a radially extending guide slot 33a, with which is engaged the pin 26 which has passed through the slot 31a of the plate 31. The outer periphery of the arm 33 is formed with a gear to which is transmitted a driving force from a motor (not shown).

Numeral 34 denotes an upper plate which is mounted so as to connect the side plates 31 and serve as a cover over the upper holder 22. On the inner surface side of the upper plate 34 is formed a link mechanism 35, which link mechanism has a pair of front ends 35a for abutment with the tape cassette 10. Numeral 36 denotes a pin projecting from the upper plate 34 in opposed relation to each L-shaped retaining piece 32.

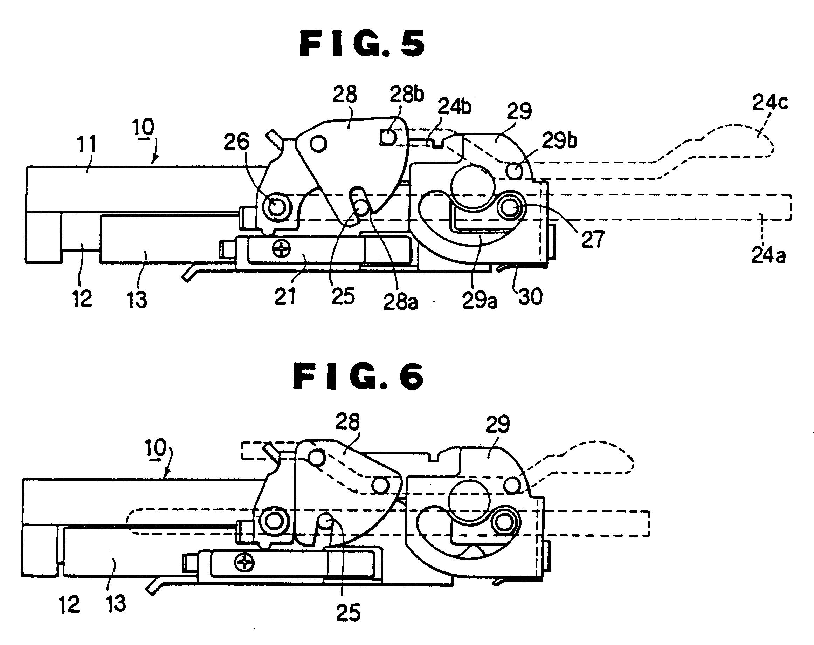

Under the construction described above, when the tape cassette 10 is inserted into the holders 20 and 22, the slider 13 moves along the upper surface of the lower holder 20 and an end face thereof is retained by the bent pieces 20c; at the same time, the lugs 20a and 20b of the lower holder 20 come into opposed relation to the retaining apertures 13a and 13b of the slider 13 and push up the lugs 12a of the lower case 12, so that the lower case becomes movable independently of the slider 13. Consequently, the cases 11 and 12 are pushed in to a further extent than the slider 13 by the inserting force of the tape cassette 10 and its upper surface is pressed by the hook 23, while the front end face of the lid 14 is retained by the springs 30. At this time, the slider 13 is held in a somewhat retracted position with respect to the lower case 12 and the elastic plates 21 are urged against the side wall faces of the slider 13, thus creating an eject state (shown in Fig. 5) holding the tape cassette 10 as a whole.

Next, when the tape cassette 10 is further pushed in for transfer to a playing state (it is not always necessary to once stop in the eject state), the link mechanism 35 is moved by the lid 14 to turn ON a switch (not shown), or by turning ON a switch which is for transfer to the playing state, an electric current is supplied to the motor and the rotating force of the motor is transmitted to the arms 33. With the resultant rotation of the arms 33 the lower and upper holders 20 and 22 are moved along the guide slots 24a and 24b of the guide plates 24, and when the pins 28b of the shift levers 28 move along inclined portions of the guide slots 24b, as shown in Fig. 6, the shift levers 28 are pivoted downwards, whereby the lower holder 20 is moved in the direction opposite to the advancing direction relative to the upper holder 22. At this time, since the slider 13 is retained by the bent pieces 20c of the lower holder 20, the slider 13 is pushed back with respect to the lower case 12, thus permitting transfer to such an open condition of the slider 13 as shown in Fig. 1. The relative movement of the holders 20 and 22 can be done smoothly by abutment of the lugs 20e and 22b. Further, as the arms 33 rotate and push the holders 20 and 22 forward, since the pins 29b of the arms 29 are in engagement with the guide slots 24b of the guide plates 24 and the pins 27 of the upper holder 22 are in engagement with the guide slots 24a of the guide plates 24, the arms 29 are turned about 30 degrees forwardly upward upon movement along inclined portions of the guide slots 24b. At this time, the lid 14 is positioned above the retaining pieces 32 and the pins 26 of the upper holder 22 are each positioned in the intersecting portion of the L-shaped slot 31a of each side plate 31.

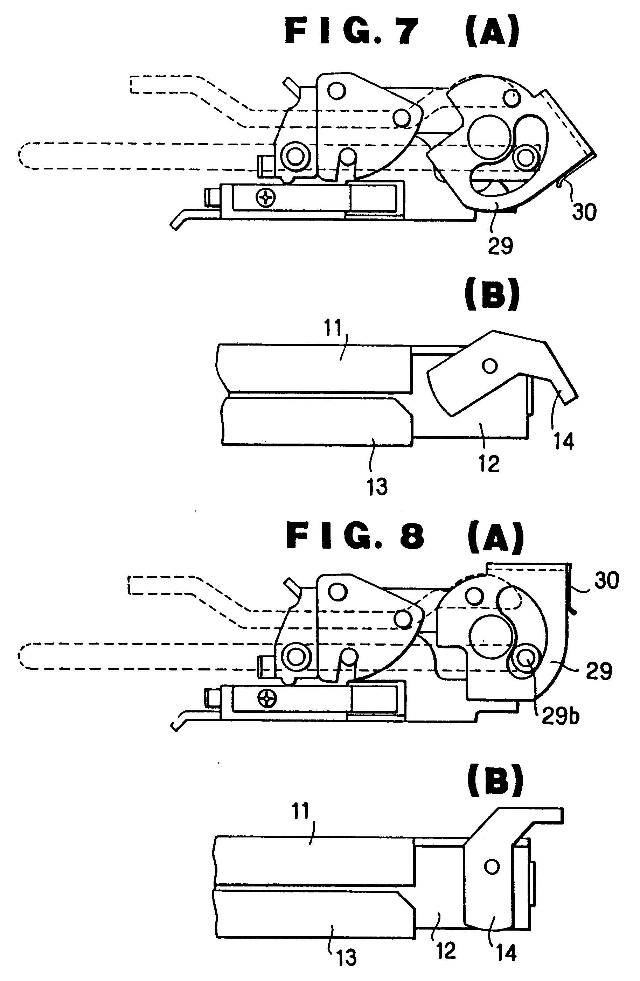

Thereafter, upon further rotation of the arms 33, the pins 26 move downward along the slots 31a and the plates 24 also move downward due to engagement of the pins 24d with the slots 31b, thereby pulling down the tape cassette 10. At this time, the arms 29 are retained by the retaining pieces 32, so the arms further turn and are held in a position turned about 90 degrees with respect to their initial state as shown in Fig. 8, thus causing the magnetic tape to be exposed completely from the cassette case and a guide post (not shown) to be positioned inside the tape. Subsequent movement of the guide post causes the magnetic tape to be pulled out and wound round a rotary cylinder, further causing the reel hubs 15 of the tape cassette 10 to be fitted on the rotating shafts (not shown). The magnetic tape is allowed to travel due to rotation of the rotating shafts. With this travel of the tape, the magnetic head attached to the rotary cylinder detects a signal recorded on the tape.

Where the tape cassette 10 is to be taken out, operation of the eject switch causes the arms 33 to be turned in the reverse direction, so that the guide plates 24 and the holders 20, 22 as a whole move upwards. At this time, in the event the lid 14 is deformed by heat or by any other cause and the lid 14 fails to turn in the closing direction despite the urging force of the spring which urges the lid in the closing direction, the pins 36 come into abutment with the upper surface of the lid 14 and cause the latter to turn in the direction to close the opening of the lower case 12. As the arms 33 further turns, the lid 14 is closed and it becomes possible for the upper case 11 to move to a larger extent than the lower case 12 and return to the initial eject position. If the tape cassette 10 is pulled out in this state, the lugs 12a are pushed in by the lugs 20b and 20a and the upper case 11 moves relative to the slider 13 because the slider is retained by the lugs 20b and 20a and urged toward the lid 14 by the spring. And upon abutment of an end face of the slider 13 with the lid 14, that is, in a completely received state of the magnetic tape, the cassette is drawn out.

There is the advantage that by once holding the tape cassette 10 in the eject state the transfer to the playing state can be done with an electric signal using, for example, a remote control unit.

Thus, in this embodiment of the present invention, the lower and upper holders 20 and 22 which support the slider 13 and the case side respectively of the tape cassette 10 are constituted separately so as to be movable relatively to each other, so it is not necessary to separately provide a drive mechanism for opening the slider 13 of the tape cassette 10. Further, since a concave portion is formed in one of the opposed side walls on each side of the lower and upper holders 20 and 22 and a convex portion formed on the other and those concave and convex portions are engaged with each other through a predetermined moving space, the moving distance of the tape cassette 10 required for opening of the slider 13 can be shortened and consequently the tape cassette inserting depth in the apparatus can be made small. Moreover, since it is not necessary to superpose the side walls of the holders 20 and 22 one on the other laterally, the thickness of each side wall portion can be reduced, thus contributing to the reduction in size of the tape player. Further, since pins 25, 26 and 27 are provided in the same level positions of the concave and convex portions of the lower and upper holders 20 and 22 and they are brought into engagement with the same guide slot 24a of each guide plate 24, it is possible to restrict the height of each guide plate 24 and the guide slots 24b which constitute the opening mechanism of the slider 13 can be disposed in the restricted spaces. Further, the arms 29 are slightly turned by engagement of the pins 29b with the guide slots 24b and thereafter the arms are brought into engagement with the retaining pieces 32 and thereby turned about 90 degrees to open the lid 14. This construction permits smooth turning of the arms 29. Besides, since it is not necessary to provide an inclined portion required for each arm 29 to turn 90 degrees, it is possible to restrict the height of each guide plate 24 and its length in the depth direction. Even in the event the lid 14 fails to turn due to deformation, it can be pushed back by the pins 36 and returned in the direction to close the opening of the cases 11 and 12.

Although the digital audio tape player for automobile has been described in the above embodiment, the present invention can also be applied to a domestic digital audio tape player having a recording function and is further applicable to data recording or reproducing tape players.

In the present invention, as set forth above, an upper holder which supports the case side of the tape cassette and a lower holder which supports the tape cassette slider are provided separately so as to be movable relatively to each other, whereby it is not required at all to use a drive mechanism for driving the tape cassette slider and consequently it becomes possible for the invention to contribute to the reduction in size of the player.

According to the present invention, moreover, a concave portion is formed in one of the opposed side walls on each side of the lower and upper holders and a convex portion formed on the other and these concave and convex portions are brought into engagement with each other through a predetermined moving space, so the moving distance required for opening the tape cassette slider can be shortened, and since it is not necessary to superpose the lower and upper holders one on the other in the thickness direction of the respective side walls, it is possible to reduce the size in the same direction, thereby permitting contribution to the reduction in size of the apparatus.

Further, according to the present invention, concave and convex portions are formed at the side walls on each side of the lower and upper holders and brought into engagement with each other and pins are attached to the convex portion of one side wall and also to the other side wall in an equal level position to the convex portion and brought into engagement with the same linear guide slot, so the guide slots for guiding the lower and upper holders can be used in common and thus it is possible to restrict the height of the guide plates, thereby contributing to the reduction in size of the apparatus.

According to the present invention, moreover, lower and upper holders are disposed in opposed relation to each other through a predetermined moving space and with shift levers being attached pivotably to the upper holder, and first pins attached to the lower holder and through which the shift levers are inserted, as well as second pins fixed to the shift levers, are brought into engagement with linear guide slots and stepped guide slots of guide plates, whereby when the second pins move along inclined portions of the stepped guide slots, the shift levers turn thereby permitting the lower holder to move in the direction opposite to the advancing direction of the tape cassette with respect to the upper holder, so that the tape cassette slider can be moved without increasing the tape cassette inserting distance. As a result, there can be obtained a practical effect that the apparatus can be constituted small in size.

## Claims

1. A tape cassette loading mechanism in a tape player for loading a tape cassette (10) which encloses a magnetic tape therein by means of an upper case (11), a lower case (12), a slider (13) mounted slidably on the lower case (12) and a lid (14) mounted pivotably with respect to said cases (11, 12), said tape cassette loading mechanism including a cassette holding means (20, 22) consisting of a lower holder (20) having lugs (20a, b) formed on the bottom thereof for engagement with retaining apertures (13a, b) formed in said slider (13) and also having bent pieces (20c) formed at the front end thereof to retain the front end portion of the slider (13) and an upper holder (22) formed separately from said lower holder (20) to support the upper case (11) of the tape cassette (10);
characterized in that
said lower and upper holders (20, 22) are movable relative to each other to open the slider (13) of the tape cassette (10).

2. A tape cassette loading mechanism according to Claim 1, wherein said upper holder (22) is U-shaped; there are provided guide plates (24) disposed along the side walls of said lower and upper holders (20, 22) to support the holders (20, 22) movably in the inserting direction of the tape cassette (10); one of the opposed side walls on each side of the lower and upper holders (20, 22) is formed with a concave portion (22a) and the other is formed with a convex portion (20d), said concave and convex portions (22a, 20d) being engaged with each other through a predetermined moving space; and said slider (13) of the tape cassette (10) is opened by a relative movement of said moving space.

3. A tape cassette loading mechanism according to Claim 1, wherein both said lower and upper holders (20, 22) are U-shaped; there are provided guide plates (24) disposed along the side walls of said lower and upper holders (20, 22) to guide the holders (20, 22) in the inserting direction of the tape cassette (10); one of the opposed side walls on each side of the lower and upper holders (20, 22) is formed with a convex portion (20d) and the other is formed with a concave portion (22a), said convex and concave portions (20d, 22a) being engaged with each other through a predetermined space; and pins (25) are attached to said convex portion (22a) and the other side wall in a position equal in height to the convex portion (22a) said pins (25) being engaged with a linear guide slot (24a) formed in each said guide plate (24).

4. A tape cassette loading mechanism according to Claim 1,
wherein
said lower holder (20) is U-shaped and has a bottom and both side walls for supporting said slider (13), with a convex portion (20d) being formed at an intermediate portion of each said side wall;
first pins (25) are provided projecting respectively from both side walls of said lower holder (20);
said upper holder (22) is U-shaped and has both side walls each disposed in opposed relation to said convex portion (20d) through a predetermined moving space and also has an upper surface portion which supports said upper case (11);
shift levers (28) are attached pivotably to said upper holder (22) to support said first pins (25) movably;
second pins (28b) are fixed to said shift levers (28) respectively; and
guide plates (24) are disposed along the side walls respectively of the lower and upper holders (20, 22) and each has a stepped guide slot (24b) continuous through an inclined portion and also has a linear guide slot (24a),
said first pins (25) being brought into engagement respectively with said linear guide slots (24a) of said guide plates (24) and said second pins (28b) into engagement respectively with said stepped guide slots (24b) of the guide plates (24), whereby when said second pins (28b) move along said inclined portions with movement of said holders (20, 22) said shift levers (28) are turned to move said lower holder (20) in the direction opposite to the advancing direction of the tape cassette (10) relative to the upper holder (22).

5. A tape cassette loading mechanism according to Claim 4, further including:
third pins (26, 27) projecting respectively from front side wall portions of said upper holder (22);
arms (29) attached rotatably to said upper holder (22);
fourth pins (29b) fixed respectively to said arms (29); and
guide plates (24) disposed along the side walls of said lower and upper holders (20, 22) and each having a stepped guide slot (24b) continuous through two inclined portions and also having a linear guide slot (24a) formed in parallel with said stepped guide slot (24b),
each said first pin (25) and said third pin (26, 27) being brought into engagement with said linear guide slot (24a) of each said guide plate (24), each said second pin (28b) and said fourth pin (29b) being brought into engagement with said stepped guide slot (24b) of each said guide plate, (24) whereby said shift levers (28) are pivoted when each said second pin (28b) moves along one said inclined portion which movement of the holders (20, 22) to move the lower holder (20) in the direction opposite to the advancing direction of the tape cassette (10) relatively to the upper holder (22), while said arms (29) are turned when each said fourth pin (29b) moves along the other of said inclined portions, to open or close said lid (14).

## Patentansprüche

1. Bandkassettenlademechanismus in einem Bandwiedergabegerät zum Laden einer Bandkassette (10), die mit Hilfe eines oberen Gehäuses (11), eines unteren Gehäuses (12), eines rutschfähig am unteren Gehäuse (12) angebrachten Gleitstücks und eines bezüglich der Gehäuse (11, 12) schwenkbar angebrachten Deckels (14) ein Magnetband enthält, wobei der Bandkassettenlademechanismus eine Kassettenhalteeinrichtung (20, 22) aufweist,
bestehend aus
einem unteren Halter (20), der Nasen (20a, b) aufweist, die an seinem Boden zum Eingriff in in dem Gleitstück (13) gebildeten Halteöffnungen (13a, b) ausgebildet sind, und der weiter Winkelstücke (20c) aufweist, die an seinem Vorderende ausgebildet sind, um den vorderen Endbereich des Gleitstücks (13) zu halten, und aus
einem oberen Halter (22), der getrennt vom unteren Halter (20) ausgebildet ist, um das obere Gehäuse (11) der Bandkassette (10) abzustützen;
**dadurch gekennzeichnet**, daß
der untere und der obere Halter (20, 22) relativ zueinander beweglich sind, um das Gleitstück (13) der Bandkassette (10) zu öffnen.

2. Bandkassettenlademechanismus nach Anspruch 1, wobei der obere Halter (22) U-förmig ist; es sind Führungsplatten (24) entlang der Seitenwände des unteren und des oberen Halters (20, 22) angeordnet, um die Halter (20, 22) beweglich in der Einführungsrichtung der Bandkassette (10) abzustützen; eine der gegenüberliegenden Seitenwände auf jeder Seite des unteren und des oberen Halters (20, 22) ist so ausgebildet, daß sie einen konkaven Bereich (22a) aufweist, und die andere ist so ausgebildet, daß sie einen konvexen Bereich (20d) aufweist, wobei der konkave und der konvexe Bereich (22a, 20d) miteinander unter einem vorbestimmten Bewegungsabstand im Eingriff stehen; und das Gleitstück (13) der Bandkassette (10) wird durch eine Relativbewegung des Bewegungsabstandes geöffnet.

3. Bandkassettenlademechanismus nach Anspruch 1, wobei sowohl der untere als auch der obere Halter (20, 22) U-förmig sind; es sind Führungsplatten (24) entlang der Seitenwände des unteren und des oberen Halters (20, 22) angeordnet, um die Halter (20, 22) in der Einführungsrichtung der Bandkassette zu führen; eine der gegenüberliegenden Seitenwände auf jeder Seite des unteren und des oberen Halters (20, 22) ist so ausgebildet, daß sie einen konvexen Bereich (20d) aufweist, und die andere ist so ausgebildet, daß sie einen konkaven Bereich (22a) aufweist, wobei der konvexe und der konkave Bereich (20d, 22a) miteinander unter einen vorbestimmten Abstand in Eingriff stehen; und Zapfen (25) sind am konvexen Bereich (22a) und an der anderen Seitenwand an einem Ort entsprechend der Höhe des konvexen Bereichs (22a) angebracht, wobei die Zapfen (25) mit einem geradlinigen Führungsschlitz (24a) in Eingriff stehen, der in jeder Führungsplatte (24) ausgebildet ist.

4. Bandkassettenlademechanismus nach Anspruch 1, wobei der untere Halter (20) U-förmig ist und einen Boden und beide Seitenwände zum Tragen des Gleitstücks (13) aufweist, wobei an einen Zwischenbereich einer jeden Seitenwand ein konvexer Bereich (20d) ausgebildet ist;
erste Zapfen (25) sind vorgesehen, die jeweils von beiden Seitenwänden des unteren Halters (20) hervorspringen;
der obere Halter (22) ist U-förmig, hat zwei Seitenwände, die jeweils dem konvexen Bereich (20d) über einen vorbestimmten Bewegungsabstand gegenüberliegen, und hat auch einen oberen Oberflächenbereich, der das obere Gehäuse (11) abstützt;
Schiebehebel (28) sind schwenkbar am oberen Halter (22) angebracht, um die ersten Zapfen (25) bewegbar zu tragen;
zweite Zapfen (28b) sind jeweils an den Schiebehebeln (28) fest angebracht; und
Führungsplatten (24) sind entlang der jeweiligen Seitenwände des unteren und des oberen Halters (20, 22) angebracht, und jede weist einen über einen geneigten Bereich verlaufenden stufenartigen Führungsschlitz (24b) und außerdem einen geradlinigen Führungsschlitz (24a) auf;
wobei die ersten Zapfen (25) jeweils in Eingriff mit den geradlinigen Führungsschlitzen (24a) der Führungsplatten (24) gebracht sind und die zweiten Zapfen (28b) jeweils in Eingriff mit den stufenartigen Führungsschlitzen (24b) der Führungsplatten (24) gebracht sind, wodurch dann, wenn sich die zweiten Zapfen (28b) bei Bewegung der Halter (20, 22) entlang der geneigten Bereiche bewegen, die Schiebehebel (28) gedreht werden und den unteren Halter (20) in einer Richtung entgegengesetzt zur Vorwärtsrichtung der Bandkassette (10) relativ zum oberen Halter (22) bewegen.

5. Bandkassettenlademechanismus nach Anspruch 4, weiter aufweisend:
dritte Zapfen (26, 27), die jeweils von Bereichen der Vorderwände des oberen Halters (22) abstehen;
Arme (29), die am oberen Halter (22) drehbar angeordnet sind;
vierte Zapfen (29b), die jeweils an den Armen (29) fest angeordnet sind; und
Führungsplatten (24), die entlang der Seitenwände des unteren und des oberen Halters (20, 22) angeordnet sind, und von denen jede einen über zwei geneigte Bereiche verlaufenden stufenartigen Führungsschlitz (24b) und weiter einen geradlinigen Führungsschlitz (24a) aufweist, der parallel zum stufenartigen Führungsschlitz (24b) ausgebildet ist;
wobei der erste Zapfen (25) und der dritte Zapfen (26, 27) in Eingriff mit dem geradlinigen Führungsschlitz (24a) einer jeden Führungsplatte (24) gebracht ist, wobei jeder zweite Zapfen (28b) und der vierte Zapfen (29b) in Eingriff mit dem stufenartigen Führungsschlitz (24b) jeder Führungsplatte (24) gebracht ist, wodurch die Schiebehebel (28) geschwenkt werden, wenn jeder zweite Zapfen (28b) sich bei Bewegung der Halter (20, 22) entlang einer der geneigten Bereiche bewegt und den unteren Halter (20) in einer Richtung entgegengesetzt zur Vorwärtsrichtung der Bandkassette (10) relativ zum oberen Halter (22) bewegt, während die Arme (29) gedreht werden, wenn jeder vierte Zapfen (29b) sich entlang der anderen der geneigten Bereiche bewegt, um den Deckel (14) zu öffenen oder zu schließen.

## Revendications

1. Mécanisme de chargement de cassette de bande monté dans un lecteur de bande pour charger une cassette de bande (10) qui renferme intérieurement une bande magnétique au moyen d'une boîte supérieure (11), d'une boîte inférieure (12), d'un coulisseau (13) monté coulissant sur la boîte inférieure (12), et d'un couvercle (14) monté pivotant par rapport auxdites boîtes (11, 12), ledit mécanisme de chargement de cassette comprenant un moyen (20, 22) de retenue de cassette composé d'une monture inférieure (20) ayant des pattes de retenue (20a, b) formées sur son fond pour coopérer avec des ouvertures de retenue (13a, b) formées dans ledit coulisseau (13) et ayant aussi des pièces pliées (20c) formées à sa partie d'extrémité avant pour retenir la partie d'extrémité avant du coulisseau (13), et une monture supérieure (22) formé séparément de ladite monture inférieure (20) pour supporter la boîte supérieure (11) de la cassette de bande (10) ;
caractérisé en ce que
lesdites montures inférieure et supérieure (20, 22) peuvent se déplacer l'une par rapport à l'autre pour ouvrir le coulisseau (13) de la cassette de bande (10).

2. Mécanisme de chargement de cassette de bande selon la revendication 1, dans lequel ladite monture supérieure (22) est en forme de U ; il est prévu des plaques de guidage (24) disposées le long des parois latérales desdites montures inférieure et supérieure (20, 22) pour supporter les montures (20, 22) mobiles dans le sens de l'insertion de la cassette de bande (10) ; sur chaque côté, une des parois latérales opposées des montures inférieure et supérieure (20, 22) est munie d'une partie concave (22a) et l'autre est munie d'une partie convexe (20d), lesdites parties concave et convexe (22a, 20d) étant en prise entre elles sur une course de déplacement prédéterminée ; et ledit coulisseau (13) de la cassette de bande (10) s'ouvre par un mouvement relatif de ladite course de déplacement.

3. Mécanisme de chargement de cassette selon la revendication 1, dans lequel lesdites montures inférieure et supérieure (20, 22) sont en forme de U ; il est prévu des plaques de guidage (24) disposées le long des parois latérales desdites montures inférieure et supérieure (20, 22) pour guider les montures (20, 22) dans la direction de l'insertion de la cassette de bande (10) ; sur chaque côté, l'une des parois latérales opposées des montures inférieure et supérieure (20, 22) est munie d'une partie convexe (20d) et l'autre est munie d'une partie concave (22a), lesdites parties convexe et concave (20d, 22a) étant en prise entre elles sur une course prédéterminée ; et des doigts (25) sont fixés à ladite partie convexe (22a) et à l'autre paroi latérale dans une position égale en hauteur à celle de la partie convexe (22a), lesdits doigts (25) étant en prise avec une fente de guidage linéaire (24a) formée dans chaque plaque de guidage (24).

4. Mécanisme de chargement de cassette de bande selon la revendication 1, dans lequel ladite monture inférieure (20) est en forme de U et présente une paroi de fond et ses deux parois latérales pour supporter ledit coulisseau (13), une partie convexe (20d) étant formée dans une partie intermédiaire de chacune desdites parois latérales ;
des premiers doigts (25) sont prévus, respectivement en saillie sur les deux parois latérales de ladite monture inférieure (20) ;
ladite monture supérieure (22) étant en forme de U et présente ses deux parois latérales disposées chacune en face de ladite partie convexe (20d) sur une course de déplacement prédéterminée, et possède aussi une partie de surface supérieure qui supporte ladite boîte supérieure (11) ;
des leviers de commande (28) sont montés pivotant sur ladite monture supérieure (22) pour supporter lesdits doigts (25) de façon mobile ;
des deuxièmes doigts (28b) sont fixés respectivement auxdits leviers de commande (28) ; et
des plaques de guidage (24) sont disposées respectivement le long des parois latérales des montures inférieure et supérieure (20, 22), et chacune possède une fente de guidage (24d) en ligne brisée, qui est continue en passant par une partie inclinée, et possède aussi une fente de guidage linéaire (24a),
lesdits premiers doigts (25) étant mis respectivement en prise avec lesdites fentes de guidage linéaires (24a) desdites plaques de guidage (24) et lesdits deuxièmes doigts (28b) étant respectivement en prise avec lesdites fentes de guidage (24b) en ligne brisée des plaques de guidage (24), de sorte que, lorsque lesdits deuxièmes doigts (28b) se déplacent le long desdites parties inclinées, en réponse au mouvement desdites montures (20, 22), lesdits leviers de commande (28) tournent pour entraîner ladite monture inférieure (20) par rapport à la monture supérieure (22) dans le sens inverse du sens d'avance de ladite cassette de bande (10).

5. Mécanisme de chargement de cassette de bande selon la revendication 4, comprenant en outre :
des troisièmes doigts (26, 27) qui font saillie respectivement sur les portions de parois latérales avant de ladite monture supérieure (22) ;
des bras (29) montés rotatifs sur ladite monture supérieure (22) ;
des quatrièmes doigts (29b) fixés respectivement auxdits bras (29), et
des plaques de guidage (24) disposées le long des parois latérales desdites montures inférieure et supérieure (20, 22) et ayant chacune une fente de guidage (24b) en ligne brisée, qui est continue en passant par deux parties inclinées, et ayant aussi une fente de guidage linéaire (24a) formée parallèlement à ladite fente de guidage (24b) en ligne brisée,
chaque premier doigt (25) et chaque troisième doigt (26, 27) étant mis en prise avec ladite fente de guidage linéaire (24a) de chaque plaque de guidage (24), chaque deuxième doigt (28b) et chaque quatrième doigt (29b) étant mis en prise avec ladite fente de guidage (24b) en ligne brisée de chaque plaque de guidage (24), de sorte que lesdits leviers de commande (28) sont basculés lorsque chaque deuxième doigt (28b) se déplace le long d'une partie inclinée, en réponse au mouvement des montures (20, 22), pour déplacer la monture inférieure (20) par rapport à la monture supérieure (22) dans le sens inverse du sens d'avance de la cassette de bande (10), tandis que lesdits bras (29) sont basculés lorsque chaque quatrième doigt (29b) se déplace le long desdites parties inclinées, pour ouvrir ou fermer ledit couvercle (14).
